# EUROPEAN PATENT SPECIFICATION

(11) **EP 2 430 249 B1**
(45) Date of publication and mention of the grant of the patent: **23.08.2017**
(21) Application number: 10726170.3
(22) Date of filing: 10.05.2010
(51) Int. Cl.: E04B 1/76, E04F 13/00, E04F 13/04, H04N 1/195

(54) **PREPARATION OF COVERINGS FOR INTERIOR BUILDING SURFACES**
VORBEREITUNG VON VERKLEIDUNGEN FÜR INNENFLÄCHEN VON GEBÄUDEN
PRÉPARATION DE REVÊTEMENTS POUR LES SURFACES INTERIEURES DE BÂTIMENTS

(30) Priority: 11.05.2009 GB 0908052; 15.02.2010 GB 201002463
(43) Date of publication of application: 21.03.2012
(73) Proprietor: The National Energy Foundation, Knowlhill Milton Keynes MK5 8NG (GB)
(72) Inventor: DOGGART, John, London NW3 4LA (GB)
(74) Representative: HGF Limited
(86) International application number: PCT/GB2010/050756
(87) International publication number: WO 2010/139971

(56) References cited:
- EP-A1- 1 637 665
- DE-A1- 3 021 537
- DE-A1- 10 038 886
- DE-A1- 19 516 732
- DE-A1- 19 544 713
- DE-A1-102007 040 938

## Description

This invention relates to a method of insulating a building. Retrofitting insulation to heat loss surfaces of buildings, especially walls and flat roofs is usually difficult and expensive. Generally, insulating a building is achieved by building a second wall of insulation on an inner surface of the wall, cladding the building externally or insulating a cavity. A number of methods have been developed for installing insulation, for example those described in EP 1637665 and DE 19544713.

However, installing internal insulation can be disruptive, as the insulation material must be cut, usually with a handsaw, around protuberances, it is generally dusty and messy and it can take a long time to fit and so it is rare to carry out internal insulation whilst occupants are in place. Improved methods of cutting insulation material include the device of DE 19516732. External insulation is expensive as scaffolding is needed, access can be awkward and there are often planning restrictions that prevent this method. Cavity wall fill (approx 50mm) is not sufficient to reach the standards that will be required in future (Approx 100mm with standard materials).

Whilst these methods are still in use today, the increasing demand for energy and carbon saving throughout the world has created a need for a more efficient method of improving the insulation properties of the heat loss surfaces of existing buildings.

It is therefore a non-exclusive object of this invention to provide such an improved method. It is a more general non-exclusive object of the invention to provide an improved method of preparing any wall and/or ceiling covering.

Accordingly, one aspect of the invention provides a method of insulating a building, the method comprising the steps of scanning an internal surface of a building to be insulated using a digital scanner, to produce a digital representation of the shape and/or size of the surface, segmenting the digital representation to produce a digital template representing selected areas of the surface to be insulated, cutting a laminated board of material using a cutting device programmed or configured in accordance with the digital template to produce two or more panels for covering the selected areas, wherein the laminated board of material from which the panels are cut includes a layer of thermally insulating material for reducing heat loss therethrough and a decorative plasterboard layer, the installing step comprising installing the panels on the selected areas of the building surface with the decorative plasterboard later facing outwardly.

For the avoidance of doubt, the term "insulating" as used herein refers to thermally insulating at least in part, that is to say reducing the transfer of heat, for example to some useful extent, e.g. out of or into the room. Moreover, the term "cutting" as used herein refers to the removal or separation of a material or substance and the term "cutter" and "cutting device" should be construed accordingly. For example, the term "cutter" may refer equally to, say, a water cutter or saw or even a router or any other suitable device.

The use of a scanner that produces a digital representation of the building surface facilitates convenient and accurate measurement and recordal of the shape and/or size thereof. The panel or panels may therefore be prepared or cut remotely, e.g. pre-fabricated, thereby precluding the need for on-site preparation. This is particularly beneficial where the panel or panels incorporate an insulation layer, which is difficult and disruptive to prepare in situ.

Preferably, the cutting step is carried out using a computer controlled cutting device, which may be programmed or configured in accordance with the digital template or with a program prepared in accordance with the digital template.

The scanning step preferably comprises the use of a laser scanner, e.g. a high definition laser scanner or camera, which may be supported on a stand or tripod and/or configured to measure a plurality, e.g. hundreds, thousands or millions, of points on a surface.

The preparation or cutting or segmenting step may comprise subtracting one or more portions or regions of the digital representation, e.g. to reflect a frame within which the panel portions or sections or panels are to be incorporated.

Advantageously, the preparation or cutting step may be carried out remotely, e.g. using a machine which may automatically prepare or cut the panel based on the digital representation. The preparation or cutting step preferably comprises cutting a plurality of panel portions or sections or panels. The board or panel portions or sections or panels may advantageously include a reflective layer, e.g. on one major surface of the insulation layer and/or with the decorative layer or plaster or plasterboard layer on the other major surface thereof. The insulation material or layer may comprise any known or suitable material, for example it may comprise a fibre or foam based structure made of a glass or plastics or stone or wool or wood based material, e.g. cellulose fibres, a foamed plastics material, wood fibre or hemp.

The preparation or cutting step may be carried out using an automatic cutting machine, which may be configured to cut automatically the board to prepare the panel or panel portion or section. The preparation or cutting step may also include removing or milling, e.g. using a CNC router, the building surface facing side of the panel or panel portion or section, e.g. to match the profile of the wall and/or features of the wall which are to be covered or clad or insulated. The cutter may comprise a knife, saw, water cutter or laser cutter or cutting device or machine.

The method may further comprise the step of transporting the panel or panel portion or section to the building surface, for example to the building, e.g. house. For example, the scanning step may take place within or at the building, while the preparation or cutting step may take place at a remote location, e.g. in a commercial establishment such as a factory or shop. The transporting step may comprise transporting the panel or panel portions or sections from the commercial establishment to the house or building.

Preferably, the installation step comprises placing and/or fixing and/or securing the panels on or to the selected areas or thereagainst, e.g. after the preparation or cutting or transporting step. More preferably, the method comprises, prior to the installation step, removing and/or extending skirting cornices and/or mouldings and/or electric sockets and/or fixtures and/or fittings and/or radiators and/or modifying pipework to accommodate the covering. Additionally or alternatively, the method may also comprise, after to the installation step, applying a decorative coating, e.g. plasterboard and/or paint, and/or fixing skirting cornices and/or mouldings and/or electric sockets and/or fixtures and/or fittings and/or radiators to the covered or decorated building surface.

The method may advantageously comprise covering two or more building surfaces, e.g. wall or ceiling or floor or roof, of one or more rooms in the or a house or building, for example it may comprise covering one or more, e.g. all, of the outer walls, i.e. an inner surface of the outer wall or walls, of the house or building.

The method of the invention reduces the labour costs associated with retrofitting an insulating covering as compared to known manual methods. A significant proportion of the cost of internal wall insulation is caused by the need to vacate the house or building whilst the insulation is cut and/or fixed to the walls. The use of prepared, e.g. pre-fabricated, panels reduces the noise and/or dust created during the installation, thereby allowing the work to be carried out whilst the occupant is in place.

Each panel may comprise a sheet or board, for example which may include an insulating, e.g. thermally insulating layer. The panel may comprise two or more panel portions or sections, for instance, that disclosed in patent DE102007040938.

Embodiments of the invention will now be described by way of example only with reference to the accompanying drawings in which:
Figure 1 is a perspective view of a wall in a house which illustrates the scanning step of a method of preparing a wall covering according to the invention;
Figure 2 illustrates the digital representation of the wall of Figure 1 immediately after the segmentation step according to a first embodiment of the invention;
Figure 3 is a section view of a segment of an insulating board for use in the method according to the first embodiment of the invention;
Figure 4 is a perspective view of a cutting or routing machine for use in the method;
Figure 5 is a section view of a segment of an insulating board for use in a method according to a second embodiment of the invention;
Figure 6 illustrates the digital representation of the wall of Figure 1 immediately after the segmentation step according to a second embodiment of the invention;
Figure 7 is a plan view of a series of wall covering segments produced by the cutting machine of Figure 4 using the digital representation of Figure 6; and
Figure 8 is a plan view of a frame for use with the wall covering segments of Figure 7.

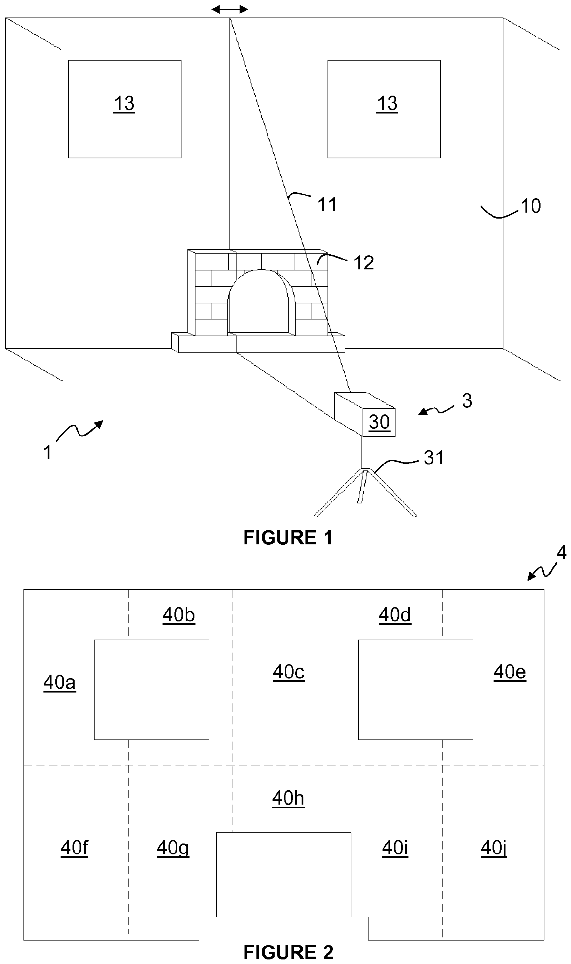

Referring to Figure 1, there is shown a wall 10 of a building 1 which is to be covered by an insulation covering. The insulation covering is prepared by first scanning 11 the wall 10 using a scanner 3 to produce a digital representation 4 of the shape and size of at least of the wall 10. The scanner 3 in this embodiment is a high definition laser camera 30 supported on a tripod 31 and is configured to measure millions of points on the wall 10 to generate the digital representation 4.

The digital representation 4 is a three dimensional representation in this embodiment, which is used to identify and subtract the areas corresponding to a fireplace 12 and two windows 13 to provide a representation of the outer profile of the wall 10. It will be appreciated that the digital representation 4 also identifies and subtracts the electric sockets, fixtures and fittings (not shown) on the wall 10.

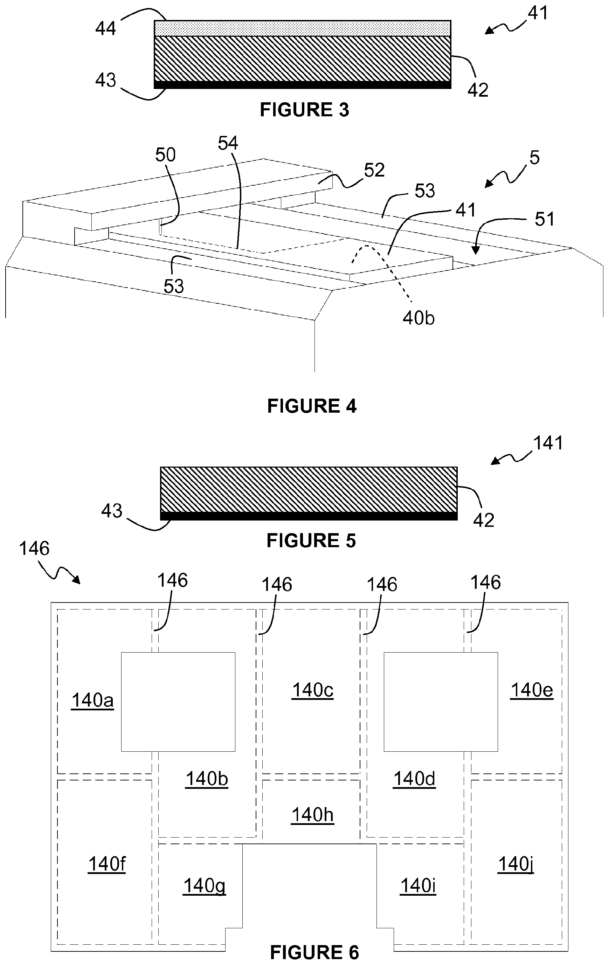

The digital representation 4 is then manipulated using an appropriate CAD software. In the first embodiment of covering shown in Figures 2 and 3, the digital representation 4 is segmented into ten covering panels 40a, 40b, 40c, 40d, 40e, 40f, 40g, 40h, 40i, 40j. The sizes and shapes of the panels 40a, 40b, 40c, 40d, 40e, 40f, 40g, 40h, 40i, 40j are chosen to facilitate their on-site installation.

As shown more clearly in Figure 3, the panels 40a, 40b, 40c, 40d, 40e, 40f, 40g, 40h, 40i, 40j are formed of a laminated insulating board material 41. The material 41 in this embodiment includes an insulation layer 42 with a reflective foil layer 43 on one of its major surfaces and a plasterboard layer 44 on the other major surface thereof. The insulation layer 42 is preferably formed of a foamed plastics material. The material 41 is such that the panels 40a, 40b, 40c, 40d, 40e, 40f, 40g, 40h, 40i, 40j are sufficiently rigid to be secured in place without the need for a frame.

As shown in Figure 4, the panels 40a, 40b, 40c, 40d, 40e, 40f, 40g, 40h, 40i, 40j are prepared automatically by a cutting machine 5 using an appropriate CAM software which interprets the digital representation 4 and cuts lengths of the material 41 accordingly. The cutting machine 5 is preferably at a remote location in relation to the building 1, for example in a commercial establishment such as a factory (not shown). The cutting machine 5 in this embodiment utilises water cutting technology, wherein the water is delivered through a nozzle 50 that moves along a work surface 51 on a carriage 52 riding on rails 53 and across the work surface 51 by translating along the length of the carriage 52. The cuts 54 made in the lengths of material 41 correspond to the pattern generated by the segmented digital representation 4 shown in Figure 2.

The prepared panels 40a, 40b, 40c, 40d, 40e, 40f, 40g, 40h, 40i, 40j are then transported from the factory to the building 1 for installation. Before installing the panels 40a, 40b, 40c, 40d, 40e, 40f, 40g, 40h, 40i, 40j the skirting cornices (not shown), mouldings (not shown), electric sockets (not shown), fixtures (not shown), fittings (not shown) and radiators (not shown) are removed and/or extended as appropriate from the wall 10 and any associated pipework is modified to accommodate them. The panels 40a, 40b, 40c, 40d, 40e, 40f, 40g, 40h, 40i, 40j are installed by placing them over the appropriate section of the wall 10 with the plasterboard layer 44 facing outwardly and fixing them thereon using conventional means. After the panels 40a, 40b, 40c, 40d, 40e, 40f, 40g, 40h, 40i, 40j have been installed, the covered walls may be painted directly due to the presence of the plasterboard layer 44 on the covering. The skirting cornices, mouldings, electric sockets, fixtures, fittings and radiators can then be replaced on the covered or decorated wall 10. Alternatively, the covered walls may be painted after these items have been replaced.

This method is preferably repeated for two or more walls 10 of one or more rooms in the building 1, for example it may comprise covering all of the outer walls 10 of the building 1.

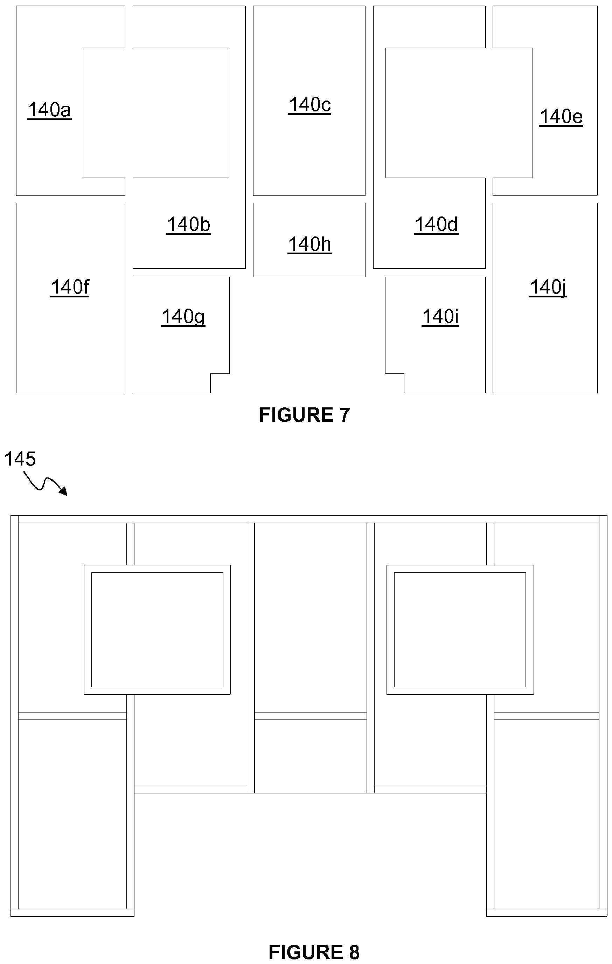

Referring now to Figure 5 to 8, there is shown an embodiment outside the scope of the invention using alternative laminated insulating board material 141. The material 141 in this embodiment is similar to the material 41 of the first embodiment and so like references illustrate like features and consequently will not be described herein. The material 141 in this embodiment differs from that of the first embodiment in that the plasterboard layer 44 is omitted. This reduces the rigidity of the material 141 and, consequently, a frame 145 (shown in Figure 8) is required.

Accordingly, the segmenting step includes the additional step of subtracting portions or regions 146 of the digital representation 104 to reflect the shape of the frame 145 within which the covering panels 140a, 140b, 140c, 140d, 140e, 140f, 140g, 140h, 140i, 140j are to be incorporated. As shown in Figure 7, the panels 140a, 140b, 140c, 140d, 140e, 140f, 140g, 140h, 140i, 140j are cut such that they fit into the spaces between the members of the frame 145.

The installation step for this second embodiment is similar to that of the first embodiment, but with the addition of placing and fixing the frame 145 against the wall prior to the installation of the panels 140a, 140b, 140c, 140d, 140e, 140f, 140g, 140h, 140i, 140j. Moreover, this configuration requires the additional step of installing plasterboard sheets (not shown) over top of the frame 145 and panels 140a, 140b, 140c, 140d, 140e, 140f, 140g, 140h, 140i, 140j prior to painting and/or replacing the skirting cornices, mouldings, electric sockets, fixtures, fittings and radiators onto the covered or decorated wall 10.

It will be appreciated by those skilled in the art that several variations to the features of the claimed embodiment described herein are envisaged without departing from the scope of the invention. For example, the covering need not be for a wall 10 and may be for a ceiling, floor, roof or any other internal building surface. The scanner 3 need not be a high precision laser camera 30 or include a tripod 31, it may comprise any suitable scanning means capable of generating the digital representation 4. Moreover, the cutting machine 5 need not comprise a water cutting device, for example it may comprise a laser cutter or conventional saw cutter or a router, for example wherein the nozzle 50 might be replaced with a routing head or other cutter. In some applications, a router is actually preferred over a water cutting device. In fact, the preparation step need not comprise a cutting step, e.g. it may comprise preparing the covering in any other suitable way, for example by moulding technology.

The size and/or shape of the panels 40a, 40b, 40c, 40d, 40e, 40f, 40g, 40h, 40i, 40j, 140a, 140b, 140c, 140d, 140e, 140f, 140g, 140h, 140i, 140j may be varied by segmenting the digital representation 4 in a different way.

## Claims

1. A method of insulating a building (1), the method comprising the steps of
a. scanning an internal surface of a building to be insulated using a digital scanner (3) to produce a digital representation (4) of the shape and/or size of the surface;
b. segmenting the digital representation to produce a digital template representing selected areas of the surface to be insulated;
c. cutting a laminated board of material (41) using a cutting device (5) programmed in accordance with the digital template to produce a plurality of panels for covering the selected areas; and
d. installing the panels on the selected areas;
wherein the laminated board of material from which the panels are cut includes a layer of thermally insulating material (42) for reducing heat loss therethrough and a decorative plasterboard layer (44), the installing step comprising installing the panels on the selected areas of the building surface with the decorative plasterboard layer facing outwardly.

2. Method according to claim 1, wherein the laminated board of material (41) comprises a reflective layer (43), the installing step comprising installing the panels on the selected areas of the building surface with the reflective layer adjacent the building surface.

3. Method according to claim 1 or claim 2, wherein the method comprises, prior to the installation step, removing and/or extending skirting cornices and/or mouldings and/or electric sockets and/or fixtures and/or fittings and/or radiators of the building surface and/or modifying pipework to accommodate the panel.

4. Method according to any one of claims 1 to 3, wherein the method comprises, after to the installation step, applying a decorative coating to the panel and/or fixing skirting cornices and/or mouldings and/or electric sockets and/or fixtures and/or fittings and/or radiators to the covered or decorated building surface.

5. Method according to any preceding claim, wherein the building surface is scanned using a laser scanner or camera and configured to measure a plurality of points on the building surface.

6. Method according to any preceding claim, wherein the manipulation step comprises subtracting or removing one or more regions of the digital representation (4).

7. Method according to any preceding claim, wherein the cutting step is carried out in a remote location relative to the scanning step.

8. Method according to claim 7 further comprising the step of transporting the prepared panel or panels to the building surface.

9. Method according to any preceding claim, wherein the cutting step comprises the use of a routing machine.

10. Method according to any preceding claim further comprising scanning, cutting and installing the panel or panels on an inner surface of one or more outer walls (10) of a house or building.

11. A building insulated according to the method of any of the preceding claims.

## Patentansprüche

1. Verfahren zum Isolieren eines Gebäudes (1), wobei das Verfahren die folgenden Schritte umfasst:
a. Scannen einer Innenfläche eines zu isolierenden Gebäudes unter Verwendung eines digitalen Scanners (3), um eine digitale Darstellung (4) der Form und/oder Größe der Fläche zu erstellen;
b. Segmentieren der digitalen Darstellung, um eine digitale Vorlage zu erstellen, die ausgewählte Bereiche der zu isolierenden Fläche darstellt;
c. Schneiden einer laminierten Materialplatte (41) unter Verwendung einer Schneidevorrichtung (5), die entsprechend der digitalen Vorlage programmiert ist, um eine Vielzahl von Paneelen zum Abdecken der ausgewählten Bereiche zu erstellen; und
d. Installieren der Paneele auf die ausgewählten Bereiche;
wobei die laminierte Materialplatte, aus der die Paneele geschnitten werden, eine Schicht aus thermisch isolierendem Material (42) zur Reduktion des Wärmeverlustes dadurch und eine dekorative Gipsbauplatten-Schicht (44) enthält, wobei der Schritt des Installierens das Installieren der Paneele auf die ausgewählten Bereiche der Gebäudefläche mit der nach außen weisenden dekorativen Gipsbauplatten-Schicht umfasst.

2. Verfahren nach Anspruch 1, wobei die laminierte Materialplatte (41) eine reflektierende Schicht (43) umfasst, wobei der Schritt des Installierens das Installieren der Paneele auf die ausgewählten Bereiche der Gebäudefläche mit der reflektierenden Schicht, benachbart zur Gebäudefläche, umfasst.

3. Verfahren nach Anspruch 1 oder Anspruch 2, wobei das Verfahren, vor dem Schritt des Installierens, das Entfernen und/oder Ausbauen der Sockel- Kranzleisten und/oder Formleisten und/oder elektrischen Steckdosen und/oder Halterungen und/oder Ausstattungen und/oder Heizkörpern der Gebäudefläche und/oder Ändern der Rohrleitungen, um das Paneel unterzubringen, umfasst.

4. Verfahren nach einem der Ansprüche 1 bis 3, wobei das Verfahren, nach dem Schritt des Installierens, das Aufbringen einer dekorativen Beschichtung auf dem Paneel und/oder Befestigen der Sockel- Kranzleisten und/oder Formleisten und/oder elektrischen Steckdosen und/oder Halterungen und/oder Ausstattungen und/oder Heizkörpern auf der bedeckten und dekorierten Gebäudefläche umfasst.

5. Verfahren nach einem der vorhergehenden Ansprüche, wobei die Gebäudefläche unter Verwendung eines Laserscanners oder -kamera gescannt wird und konfiguriert ist, um eine Vielzahl von Punkten auf der Gebäudefläche zu messen.

6. Verfahren nach einem der vorhergehenden Ansprüche, wobei der Schritt des Manipulierens das Subtrahieren oder Entfernen eines oder mehrerer Bereiche der digitalen Darstellung (4) umfasst.

7. Verfahren nach einem der vorhergehenden Ansprüche, wobei der Schritt des Schneidens an einem abgelegenen Ort relativ zum Schritt des Scannens durchgeführt wird.

8. Verfahren nach Anspruch 7, ferner umfassend den Schritt des Transportierens des vorbereiteten Paneels oder Paneele zu der Gebäudefläche.

9. Verfahren nach einem der vorhergehenden Ansprüche, wobei der Schritt des Schneidens die Verwendung einer Oberfräse umfasst.

10. Verfahren nach einem der vorhergehenden Ansprüche, ferner umfassend das Scannen, Schneiden und Installieren des Paneels oder der Paneele auf einer Innenfläche einer oder mehrerer Außenwände (10) eines Hauses oder Gebäudes.

11. Isoliertes Gebäude nach dem Verfahren nach einem der vorhergehenden Ansprüche.

## Revendications

1. Procédé d'isolation d'un bâtiment (1), ledit procédé comprenant les étapes de :
a. balayage d'une surface interne d'un bâtiment à isoler à l'aide d'un dispositif de balayage numérique (3) de façon à produire une représentation numérique (4) de la forme et/ou de la taille de ladite surface ;
b. segmentation de la représentation numérique de façon à produire un gabarit numérique représentant des zones sélectionnées de ladite surface à isoler ;
c. coupe d'une planche stratifiée (41) de matériau à l'aide d'un dispositif de coupe (5) programmé en fonction du gabarit numérique afin de produire une pluralité de panneaux permettant de couvrir les zones sélectionnées ; et
d. l'installation des panneaux sur les zones sélectionnées ;
ladite planche stratifiée de matériau à partir de laquelle les panneaux sont coupés comprenant une couche de matériau thermiquement isolant (42) pour réduire les pertes de chaleur à travers ceux-ci et une couche de plaque de plâtre décorative (44), l'étape d'installation comprenant l'installation des panneaux sur les zones sélectionnées de la surface du bâtiment avec la couche de plaque de plâtre décorative faisant face vers l'extérieur.

2. Procédé selon la revendication 1, ladite planche stratifiée de matériau (41) comprenant une couche réfléchissante (43), ladite étape d'installation comprenant l'installation des panneaux sur les zones sélectionnées de la surface du bâtiment avec ladite couche réfléchissante adjacente à la surface du bâtiment.

3. Procédé selon la revendication 1 ou 2, ledit procédé comprenant, avant l'étape d'installation, la suppression et/ou l'extension de corniches et/ou de moulures et/ou de prises électriques et/ou d'appareils de fixation et/ou d'éléments encastrés et/ou de radiateurs de la surface du bâtiment et/ou la modification d'une tuyauterie pour recevoir le panneau.

4. Procédé selon l'une quelconque des revendications 1 à 3, ledit procédé comprenant, après l'étape d'installation, l'application d'un enduit décoratif au panneau et/ou la fixation de corniches et/ou de moulures et/ou de prises électriques et/ou d'appareils de fixation et/ou d'élément encastrés et/ou de radiateurs à la surface du bâtiment couverte ou décorée.

5. Procédé selon l'une quelconque des revendications précédentes, ladite surface du bâtiment étant balayée à l'aide d'un dispositif de balayage laser ou d'une caméra et conçu pour mesurer une pluralité de points sur la surface du bâtiment.

6. Procédé selon l'une quelconque des revendications précédentes, ladite étape de manipulation comprenant la soustraction ou la suppression d'une ou plusieurs zones de la représentation numérique (4).

7. Procédé selon l'une quelconque des revendications précédentes, ladite étape de coupe s'effectuant dans un endroit éloigné par rapport à l'étape de balayage.

8. Procédé selon la revendication 7, comprenant en outre l'étape de transport du panneau ou des panneaux préparés pour la surface du bâtiment.

9. Procédé selon l'une quelconque des revendications précédentes, ladite étape de coupe comprenant l'utilisation d'une machine de routage.

10. Procédé selon l'une quelconque des revendications précédentes, comprenant en outre le balayage, la coupe et l'installation du panneau ou des panneaux sur une surface interne d'un ou plusieurs murs externes (10) d'une maison ou d'un bâtiment.

11. Bâtiment étant isolé selon ledit procédé de l'une quelconque des revendications précédentes.
